# EUROPEAN PATENT APPLICATION

(11) **EP 4 080 022 A1**
(43) Date of publication of application: **26.10.2022**
(21) Application number: 21169464.1
(22) Date of filing: 20.04.2021
(51) Int. Cl.: F01N 3/023, F01N 3/20, F01N 3/30, F01N 3/32

(54) **EXHAUST GAS AFTER TREATMENT DEVICE**

(71) Applicant: Winterthur Gas & Diesel Ltd., 8401 Winterthur (CH)
(72) Inventor: Lehner, Adrian, 8560 Märstetten (CH)
(74) Representative: Hepp Wenger Ryffel AG

(57) **Abstract**

The invention relates to an soot blower unit (20) for an exhaust gas after treatment device (10) for an internal combustion engine (1), an exhaust gas after treatment device (10), an internal combustion engine 1 and a method for blowing soot from a catalyst (30). The soot blower unit (20) comprises a supply line (21) for providing pressurised air and at least one injection device (22) with a soot blowing valve (23), in particular a diaphragm valve, being fluidly connected or connectable to the supply line (21) for providing pressurised air. The soot blower unit (20) comprises a pipeline (24) for providing back-up sealing air, fluidly connected or connectable to the supply line (21) for providing pressurised air, upstream of the at least one injection device (22).

## Description

The invention relates to a soot blower unit for an exhaust gas after treatment device, an exhaust gas after treatment device for an internal combustion engine, an internal combustion engine and a method for blowing soot from a catalyst.

The present invention preferably relates to an internal combustion engine like a large marine or ship engine or a stationary engine whose cylinders have an inner diameter of at least 200 mm. The engine preferably is a two-stroke engine or a two-stroke cross head engine. The engine can be a diesel or a gas engine, a dual fuel or a multi fuel engine. Burning of liquid and or gaseous fuels in such engines is possible as well as self-igniting or forced igniting.

The internal combustion engine can be a longitudinally flushed two-stroke engine.

The term internal combustion engine also refers to large engines which can be operated not only in diesel mode, which is characterized by the self-ignition of the fuel, but also in Otto mode, which is characterized by the positive ignition of the fuel, or in mixtures of the two. Furthermore, the term internal combustion engine includes in particular dual-fuel engines and large engines in which the self-ignition of the fuel is used for the positive ignition of another fuel.

Engine speed is preferably below 800 RPM, especially for 4-stroke engines, and more preferably below 200 RPM, especially for 2-stroke engines, which indicates the designation of low speed engines.

Fuel can be diesel or marine diesel oils or heavy fuel oils or emulsions or slurries or methanol or ethanol as well as gases like liquid natural gas (LNG) liquid petrol gas (LPG) and so on.

Further possible fuels which might be added on request are: LBG (Liquefied Biogas), biological fuels (e. g. oil made from algae or seaweed), ammonia, hydrogen, synthetic fuels from CO2 (e. g. made by Power-To-Gas or Power-To-Liquid).

Large ships, in particular vessels for transport of goods, usually are powered by internal combustion engines, in particular diesel and/or gas engines, mostly two-stroke, cross head engines.

SCR (selective catalytic reduction) technology is used to reduce the level of nitrogen oxides (NOx) in an exhaust gas of a combustion engine. SCR is commonly used in land-based engines, e.g. heavy-duty vehicles, industrial plants and other applications. SCR technology has also been used in marine environments in combination with two-stroke diesel engines. Due to regulatory requirements for marine diesel engines and land based engines, there is an increased need for efficient SCR systems.

The catalytic elements of an SCR reactor are exposed to soot loaded exhaust gas flow. The SCR reactor may therefore comprise an SCR cleaning system for cleaning an SCR catalyst, in particular for removing soot deposited on the front area of a catalyst layer. In order to prevent excessive deposit build-up and clogging of the catalytic elements, the deposited soot is blown off periodically by blasts of compressed air laterally to the exhaust flow direction by the means of specifically arranged soot blowing unit.

Usually soot blowing units comprise an arrangement of soot blowing valves, air tank(s) and piping.

Such valves are typically diaphragm valves which have a large flow area and a very short opening time. On high-pressure SCR installations, the soot blowing system must be pressurised (e.g. by pressurised air) throughout the whole operating time of the engine to prevent the diaphragm valves to be pushed open by the exhaust gas pressure and to prevent backflow of hot exhaust gas into the soot blowing unit. Backflow of hot exhaust gas can cause thermal damage to the valve diaphragms, resulting in valve malfunction and possibly exhaust gas leakage.

KR101818262B1 discloses a soot blowing unit comprising an air supply line, a spraying device which sprays air to the SCR catalyst, a control unit which controls the supply of air and an exhaust gas auxiliary inflow line which independently connects the spraying device and an exhaust manifold of an engine, such that a part of the exhaust gas is utilized in cleaning the SCR catalyst. However, exhaust gas may cause additional build-up of soot at the SCR catalyst.

The invention is based on the task of providing a soot blower unit, an exhaust gas after treatment device, an internal combustion engine and a method for blowing soot from a catalyst which avoid the disadvantages of the known, which in particular provide for reliably and durably removing soot from a catalyst.

The object is achieved by the characteristics of the independent claims.

According to the invention a soot blower unit for an exhaust gas after treatment device for an internal combustion engine comprises a supply line for providing pressurised air and at least one injection device. The injection device comprises a soot blowing valve, in particular a diaphragm valve, being fluidly connected or connectable to the supply line for providing pressurised air.

The soot blowing valve can be opened for a very short opening time, typically less than Is, to release pressurized air to the surface of a catalyst to remove any soot which has been build up.

The injection device may comprise at least one nozzle which is directed to the surface of the catalyst, in particular to parts of the surface which tend to catch soot, because they are arranged transverse to the flow direction of the exhaust gas.

Preferably, the injection device comprises at least one nozzle per catalyst surface to be blown at.

The soot blower unit comprises a pipeline for providing back-up sealing air. The pipeline is fluidly connected or connectable to the supply line for providing pressurised air, upstream of the at least one injection device. Thus the soot blowing valve may be pressurized with back-up sealing air, which may prevent backflow of hot exhaust gas into the soot blowing unit.

Regularly, the pressure of the back-up sealing air is kept too small for blowing off the soot.

In situations when the pressure of the exhaust gas is higher than the pressure provided by the supply line, there is the risk that exhaust gas opens the soot blowing valve and exhaust gas may be guided through the soot blowing valve. Especially, when a soot blowing main valve is closed no pressurized air can be provided to the injection device.

The pipeline for providing back-up sealing air may keep a pressure on the injection device even in situations when no or a too low pressure is provided by the supply line.

In particular, back-up sealing air is branched off the scavenge air from a turbine of a turbocharger or from an inlet manifold of an internal combustion engine.

The pressure of the scavenge air of a 2-stroke internal combustion engine generally is higher than the exhaust gas pressure, and by pressurising the soot blowing unit by scavenge air, no backflow of hot exhaust gas to the soot blowing unit can happen. The soot blowing valves, in particular diaphragm valves, are protected.

The pressure provided by the exhaust gas in the SCR rector may be up to 4bar, typically 3.5bar-3.6bar. The pressure of the scavenge air may be 0.3bar higher.

The soot blower unit may comprise a soot blowing air compressor for producing compressed air of typically 8bar - lObar.

Alternatively or additionally the soot blower unit may comprise a pressure vessel for holding compressed air, for example downstream of an air compressor. The pressure vessel may have a volume of 2001-2501.

The vessel may be pressure resistant up to 8bar - lObar.

Preferably the pipeline for providing back-up sealing air may be pressurized by a pressure of at least 4bar.

The soot blower unit preferably comprises a soot blowing main valve arranged in the supply line. The pipeline may be fluidly connected or connectable to the supply line for providing pressurised air downstream of the soot blowing main valve.

Back-up sealing air, such as scavenge air, can be used only for protection.

During engine operation without SCR operation, when for example only the Tier II criteria have to be fulfilled, the soot blowing main valve may be kept closed. In this mode, the exhaust gas usually does not pass the SCR reactor, but passes a bypass. However, the SCR reactor may be still be pressurized by the exhaust gas pressure. Also in this case, the pressure of the back-up sealing air prevents the opening of the soot blowing valves. Hence, it is not necessary to pressurize the injection device with pressurized air generated in the soot blowing air compressor.

Operation costs of the ship's soot blowing air compressor may hence be reduced. The SCR catalyst may be ready for use, when the SCR operation restarts.

A non-return valve may be arranged in the pipeline for providing back up sealing air. Hot exhaust gas or pressurized air may be prevented from streaming towards for example the compressor of a turbocharger or the air inlet of the combustion engine.

Additionally or alternatively a non-return valve may be arranged in the supply line for providing pressurised air, preferably downstream of a soot blowing main valve. Hot exhaust gas or back-up sealing air, which may contain water, may be prevented from streaming towards for example the soot blowing air compressor.

The non-return valve may typically provide an opening pressure of 0.02bar.

Non-return valves may be installed to avoid air leakage into the supply system.

The soot blower unit does not need a regulate valve being arranged in the pipeline for providing back up sealing air. As long as the engine is running, back-up sealing air may be generated by the turbocharger.

In a beneficial embodiment of the soot blower unit the soot blower unit comprises a control unit. The control unit may be designed for setting the at least one soot blowing valve and/or for setting a soot blowing main valve.

The control unit may be designed for receiving data of a sensor, for example pressure data collected and provided by a pressure sensor downstream the compressor. The control unit may be designed for only opening the soot blowing valve and/the soot blowing main valve, when the measured pressure is above a predetermined pressure value. The opening frequency of the soot blowing valves may depend on fuel quality and the resulting soot load.

The soot blowing valves preferably are opened successively, such that the full pressure is provided for each of the valve.

The soot blowing valves may be opened once per day up to once per a quarter of an hour.

The control unit may be designed for receiving data of a sensor being representative for the soot load of a catalyst. One or more pressure sensors may be arranged in the SCR reactor and may for example provide data showing the pressure drop of exhaust gas along the SCR reactor. The control unit may be designed for only opening the soot blowing valve and/the soot blowing main valve, as soon and as long as the data is above a predetermined data.

The provision of back-up sealing air may be automatically active if the pressure of the main soot blowing pressurized air is lower than the pressure of the back-up sealing air.

The control unit may be designed such that a soot blowing main valve arranged in the supply line for providing pressurised air is opened when the internal combustion engine shall be operated in a TIER III modus. The control unit may be designed to close the regulate valve otherwise.

When Tier III criteria have to be fulfilled the exhaust gas after treatment device is operated with use of the SCR catalysts. In this case it is important, that the catalysts are kept free of soot.

The problem is also solved by an exhaust gas after treatment device for an internal combustion engine comprising at least one SCR catalyst and at least one soot blower unit as described above.

The exhaust gas after treatment device may comprise a number of SCR catalysts and at least one injection device for each of the catalysts. The catalysts may be arranged in an SCR reactor.

The soot blower unit preferably is arranged such that air flow from the injection device flows in a direction different from the main flow direction of the exhaust gas, in particular laterally or transverse to the exhaust flow direction. Accordingly, the soot blowing valve is arranged, such the main flow direction of the exhaust gas is not directly oriented to the valve.

However, when the exhaust gas pressure is high a back pressure might be necessary to keep the soot blowing valve closed. This back pressure may be provided by the compressed air via the supply line and/or by the back-up sealing air via the pipeline.

The problem is also solved by an internal combustion engine comprising at least one cylinder and at least one exhaust gas after treatment device as described above.

The internal combustion engine preferably comprises a turbocharger.

The exhaust gas after treatment device may be arranged upstream of the turbine of the turbocharger. In this case the exhaust gas usually has a relatively high pressure when it passes the SCR catalyst. A back pressure might be necessary to keep the soot blowing valve closed.

The pipeline for providing back-up sealing air may be fluidly connected or connectable to the compressor of the turbocharger. Preferably, the pipeline is fluidly connected or connectable to the turbocharger downstream of the compressor, for example downstream of a cooler. Hence, scavenge air may be provided as back-up sealing air with a sufficiently high pressure, which usually is higher than the pressure of the exhaust gas in the catalyst.

The problem is also solved by a method for blowing soot from a catalyst of an exhaust gas after treatment device for an internal combustion engine, preferably an exhaust gas after treatment device as described above.

Pressurised air is provided in a supply line. The pressurized air is blown to the catalyst via at least one injection device, which comprises at least one soot blowing valve, in particular a diaphragm valve. The injection device is fluidly connected with a supply line for providing pressurised air.

In particular the pressurized air is blown in a direction different from the main flow direction of the exhaust gas in the catalyst.

A back-up sealing air is provided in a pipeline, which is fluidly connected to the supply line for providing pressurised air upstream of the at least one injection device.

Hence the valve soot blowing valve is pressurized by the back-up sealing air.

The back-up sealing air may be provided in a compressor of a turbocharger of the internal combustion engine, thus the back-up sealing air may be scavenging air.

Further advantageous aspects of the invention are explained in the following by means of exemplary embodiments and the figure. In the drawing, in a schematic manner:
Figure 1: shows a schematic illustration of an internal combustion engine;
Figure 2: shows an example of a soot blowing valve.

The internal combustion engine 1 comprises a cylinder 2 and an exhaust gas after treatment device 10.

The exhaust gas after treatment device 10 comprises several SCR catalysts 30 and a soot blower unit 20
Exhaust gas leaves the cylinder 2, passes an exhaust manifold 36 and is guided through an SCR reactor 37 hosting the SCR catalysts 30. The exhaust gas carries along carbon particles which may build up a soot layer on the catalysts 30. The soot may be removed by a blow of pressurized air.

Pressurized air may be produced in a soot blowing air compressor 25 and may be stored in a pressurized air vessel 38.

When a soot blowing main valve 26 is open, the pressurized air may be guided by a supply line 21 to injection devices 22. For each catalyst 30 there is one injection device 22. Each injection device 22 comprises a soot blowing valve 23. When the soot blowing valve 23 is opened an air flow from the injection device 22 blows to the respective catalyst 30 in a direction 35 perpendicular to the main flow direction 34 of the exhaust gas. Soot will be removed from the catalyst 30.

A pipeline 24 for providing back-up sealing air, is fluidly connected to the supply line 21 for providing pressurised air upstream of the injection devices 22 and downstream of the soot blowing main valve 26.

The back-up sealing air is branched off the scavenge air from a compressor 33 of a turbocharger 31. The back-up sealing air pressurizes the soot blowing valves 23, such that they may not unintentionally opened by exhaust gas, because the pressure of scavenge air usually is higher that the pressure of exhaust gas.

A non-return valve 27a is arranged in the pipeline 24. A non-return valve 27b is arranged in the supply line downstream of the soot blowing main valve 26 and upstream of the fluid connection between the supply line 21 and the pipeline 24.

Compressed air may not be guided to the compressor 33.

The turbocharger 31 further comprises a turbine 32 which is driven by the exhaust gas leaving the SCR reactor 37.

The soot blower unit 20 comprises a control unit 29 for setting the soot blowing valves 23 and the soot blowing main valve 26.

A pressure sensor 39 is arranged in the supply line 21. Depending on the pressure in the supply line 21, the control unit may allow opening the soot blowing valves 23.

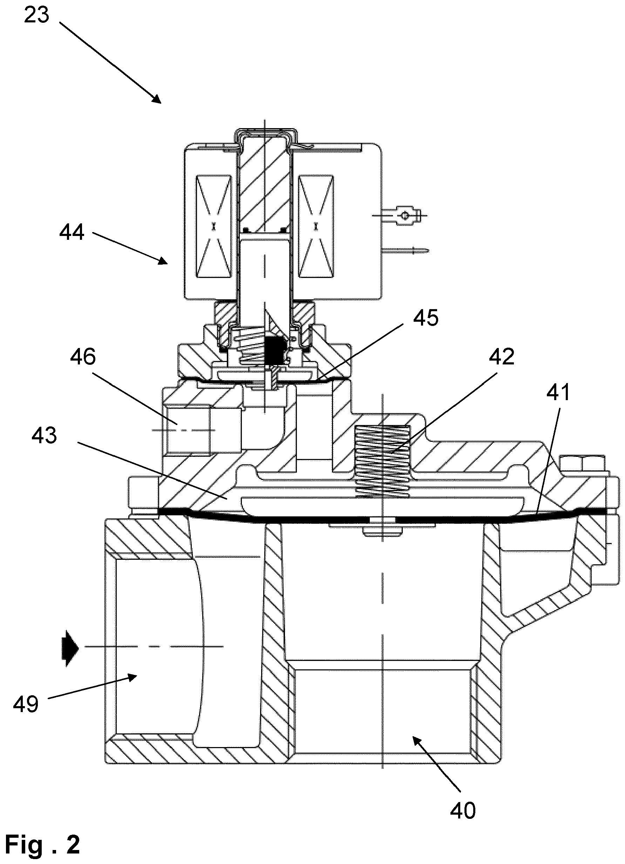

Figure 2 shows an example of a soot blowing valve 23.

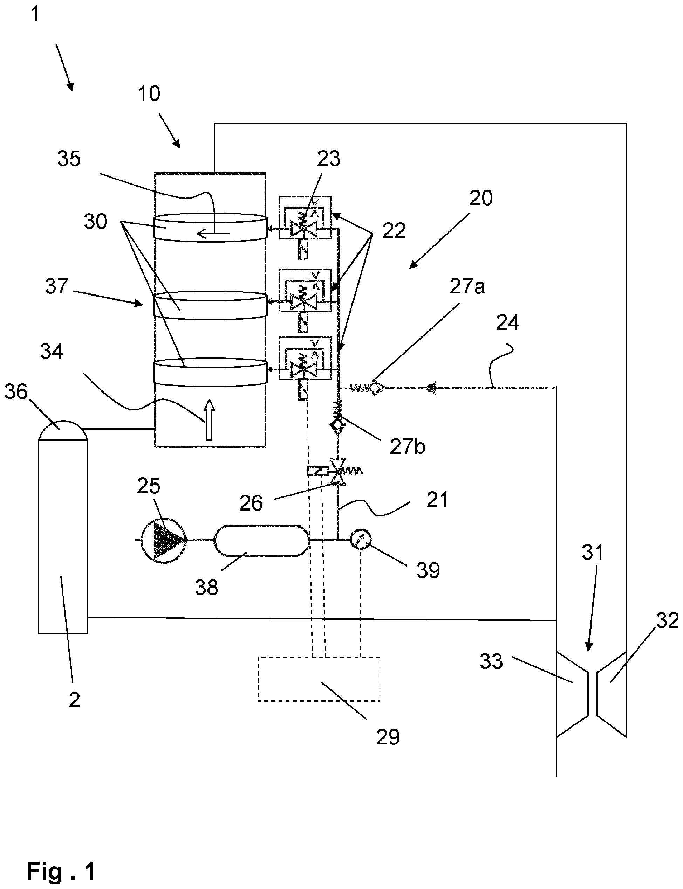

The soot blowing valve comprises an inlet 49, which may be connected to the supply line 21 (see figure 1). The soot blowing valve further comprises an outlet 40 which is directed to a surface of a SCR catalyst 30 (see figure 1).

In this example the soot blowing valve 23 comprises a membrane 41 or diaphragm. A spring 42 is used to hold the soot blowing valve 23 normally closed while the soot blowing valve 23 is not activated.

When pressure is provided by the soot blowing air compressor 25 (see figure 1) a pinhole (not shown in the figure) through the membrane 41 allows pressurized air to enter a cavity 43 on the back side of the diaphragm 41 such that pressure is equal on both sides of the diaphragm 41. The spring 42 supplies a net downward force.

If current is passed through a solenoid 44, a further membrane 45 is withdrawn via magnetic force. A part of the pressurized air may escape through a second outlet 46 and the pressure in the cavity 43 drops. The force of the spring 42 is not big enough to keep the membrane 41 down. The soot blowing valve 23 opens and pressurized air may escape through the outlet 40.

When the solenoid 44 is deactivated, pressure immediately builds up in the cavity 43 again and the membrane 41 is pressed down to close the valve 23.

When the pressure on the side of the outlet 40 is higher than on the side of the inlet 49 the spring 42 might not provide a sufficient force for keeping the membrane 41 closed.

Hence, it is necessary to provide a sufficient pressure on the inlet side even when the soot blowing main valve 26 (see figure 1) is closed. Exhaust gas, providing a pressure in the outlet 40 will not be able open the membrane 41.

A stronger force of the spring 42 could principally keep the membrane 41 closed also during occurrence of a pressure in the outlet 40. However, a stronger force of the spring 42 would change the dynamics of the soot blowing valve 23. The opening of the valve 23 would take more time.

For blowing soot a short pressure pulse is desired. Thus, the valve 23 should respond very fast which is only possible with a relatively weak spring force.

## Claims

1. Soot blower unit (20) for an exhaust gas after treatment device (10) for an internal combustion engine (1) with
- a supply line (21) for providing pressurised air,
- at least one injection device (22) comprising a soot blowing valve (23), in particular a diaphragm valve, being fluidly connected or connectable to the supply line (21) for providing pressurised air, **characterized in that** the soot blower unit (20) comprises
- a pipeline (24) for providing back-up sealing air, fluidly connected or connectable to the supply line (21) for providing pressurised air .

2. Soot blower unit (20) according to claim 1, wherein the soot blower unit (20) comprises a soot blowing air compressor (25) .

3. Soot blower unit (20) according to at least one of the preceding claims, wherein the soot blower unit (20) comprises a soot blowing main valve (26) arranged in the supply line.

4. Soot blower unit (20) according to at least one of the preceding claims, wherein a non-return valve (27a, 27b) is arranged in the pipeline (24) for providing back up sealing air and/or in the supply line (21) for providing pressurised air, preferably downstream of a soot blowing main valve (26).

5. Soot blower unit (20) according to at least one of the preceding claims, wherein the soot blower unit (20) comprises a control unit (29), preferably for setting the at least one soot blowing valve (23) and/or a soot blowing main valve (26).

6. Soot blower unit (20) according to claim 5, wherein the control unit is designed for receiving data of a sensor being representative for the soot load of a catalyst (30), for example the pressure drop of exhaust gas along an SCR reactor (37), and the control unit preferably is designed for only opening the soot blowing valve (23) and/the soot blowing main valve (26), when the data is above a predetermined data.

7. Soot blower unit (20) according to claim 5 or 6, wherein the control unit (29) is designed such that a soot blowing main valve (26) arranged in the supply line (21) for providing pressurised air is opened when the internal combustion engine (1) shall be operated in a TIER III modus.

8. Exhaust gas after treatment device (10) for an internal combustion engine (1) comprising at least one SCR catalyst (30) and at least one soot blower unit (20) according to at least one of the preceding claims, in particular the soot blower unit (20) being arranged such that air flow from the injection device (22) flows in a direction (35) different from the main flow direction (34) of the exhaust gas.

9. Internal combustion engine (1) comprising at least one cylinder (2) and at least one exhaust gas after treatment device (10) according to claim 8.

10. Internal combustion engine (1) according to claim 9, wherein the internal combustion engine (1) comprises a turbocharger (31), and wherein the exhaust gas after treatment device (10) is arranged upstream of the turbine (32) of the turbocharger (31).

11. Internal combustion engine (1) according to claim 9 or 10, wherein the internal combustion engine (1) comprises a turbocharger (31), and wherein the pipeline (24) for providing back up sealing air is fluidly connected or connectable to the compressor (33) of the turbocharger (31).

12. Method for blowing soot from a catalyst (30) of an exhaust gas after treatment device (10) for an internal combustion engine (1), preferably an exhaust gas after treatment device (10) according to claim 8, wherein
- pressurised air is provided in a supply line (21),
- the pressurized air is blown to the catalyst (30) via at least one injection device (22) comprising a soot blowing valve (23), in particular a diaphragm valve, which is fluidly connected with the supply line (21) for providing pressurised air, in particular the pressurized air is blown in a direction (35) different from the main flow direction (34) of the exhaust gas in the catalyst (30), wherein
a back-up sealing air is provided in a pipeline (24), which is fluidly connected to the supply line (21) for providing pressurised air upstream of the at least one injection device (22).

13. Method according to claim 12, wherein the back-up sealing air is scavenge air provided in a compressor (33) of a turbocharger (31) of the internal combustion engine (1).
